# EUROPÄISCHE PATENTSCHRIFT

(11) **EP 0 825 498 B1**
(45) Veröffentlichungstag und Bekanntmachung des Hinweises auf die Patenterteilung: **18.12.2002**
(21) Anmeldenummer: 97114015.7
(22) Anmeldetag: 14.08.1997
(51) Int. Cl.: G03G 15/10

(54) **Vorrichtung zum Einfärben eines latenten elektrostatischen Bildes**
Apparatus for coloring of a latent electrostatic image
Appareil de coloration d'une image électrostatique latente

(30) Priorität: 23.08.1996 DE 19634088
(43) Veröffentlichungstag der Anmeldung: 25.02.1998
(73) Patentinhaber: MAN Roland Druckmaschinen AG, 63012 Offenbach (DE)
(72) Erfinder: Hirt, Alfred, Dr., 81477 München (DE); Weiss, Robert, 86368 Gersthofen (DE)
(74) Vertreter: Matthes, Klaus, Dipl.-Ing.

(56) Entgegenhaltungen:
- DE-A- 2 207 353
- JP-A- 58 173 770
- US-A- 4 058 637
- PATENT ABSTRACTS OF JAPAN vol. 008, no. 014 (P-249), 21. Januar 1984 & JP 58 173770 A (NIPPON DENKI KK), 12. Oktober 1983
- PATENT ABSTRACTS OF JAPAN vol. 006, no. 263 (M-181), 22. Dezember 1982 & JP 57 157765 A (FUJITSU KK), 29. September 1982
- PATENT ABSTRACTS OF JAPAN vol. 011, no. 173 (P-582), 4. Juni 1987 & JP 62 005283 A (TOSHIBA CORP), 12. Januar 1987
- PATENT ABSTRACTS OF JAPAN vol. 010, no. 100 (M-470), 16. April 1986 & JP 60 234852 A (NIPPON DENKI KK), 21. November 1985
- PATENT ABSTRACTS OF JAPAN vol. 012, no. 052 (M-668), 17. Februar 1988 & JP 62 199451 A (TOSHIBA CORP), 3. September 1987
- PATENT ABSTRACTS OF JAPAN vol. 097, no. 002, 28. Februar 1997 & JP 08 258269 A (MURATA MACH LTD), 8. Oktober 1996

## Beschreibung

Die Erfindung bezieht sich auf und eine Vorrichtung zum bilddifferenzierenden Einfärben eines latenten elektrostatischen Bildes.

Bei elektrographischen Druckverfahren wird in der Regel ein bildmäßig aufgebrachtes Ladungsmuster erzeugt, das mit Hilfe elektrisch geladener Farbteilchen entwickelt und dann auf einen Bedruckstoff übertragen wird.

Die Entwicklungsstationen bestehen aus Anordnungen, bei denen entweder kleine geladene Feststoffpartikel (Trockentoner), oder in einer unpolaren Trägerflüssigkeit suspendierte geladene Teilchen (Flüssigtoner) auf die elektrographische Druckform übertragen werden. Bei Flüssigtonern sind wegen der wesentlich kleineren Teilchengröße höhere Auflösungen erzielbar.

Für Trockentoner sind Entwicklungsstationen mit Magnetbürsten- oder Kaskadenentwicklung bekannt, bei Flüssigtonern wird Badentwicklung oder Tonerantrag über Walzen oder durch Aufsprühen verwendet.

Bei all diesen Verfahren wird die geladene Farbe (Toner) undifferenziert an die gesamte Druckformoberfläche angetragen und dann infolge der elektrostatischen Kräfte zwischen Bild- und Nichtbildstellen differenziert. Es ist ein prinzipielles Problem, auch die letzten Tonerreste von den Nichtbildstellen fernzuhalten.

Bei Flüssigtonern entsteht das zusätzliche Problem, daß die unpolare Trägerflüssigkeit die gesamte Druckformoberfläche benetzt und durch aufwendige Verfahren zumindest von den Nichtbildstellen entfernt werden muß.
Aus der US 4 268 597 sind bereits ein Verfahren und eine Vorrichtung zum Entwickeln eines elektrostatischen Bildes auf der Oberfläche eines Gegenstands, z. B. einer Walze oder eines Bedruckstoffs bekannt, wobei der Gegenstand in die Nähe der Oberfläche einer Entwicklerflüssigkeit gebracht wird, ohne diese jedoch zu berühren. Die Stärke des elektrischen Feldes und der Abstand zwischen der Oberfläche des Gegenstands und der Flüssigkeitsoberfläche im Bereich der Entwicklungszone sind derart, daß in Verbindung mit einem äußeren Feld oder ohne äußeres elektrisches Feld das elektrische Feld des latenten Bildes die Oberfläche der Entwicklerflüssigkeit in Richtung zu den Bildanteilen auf der Oberfläche des Gegenstandes anzieht, so daß die Flüssigkeitsoberfläche auf die elektrisch anziehenden Bereiche auf der Oberfläche herunterreicht und sich das in der Flüssigkeit enthaltene Bebilderungsmaterial auf dem latenten Bild ablagert. Die Flüssigkeitsoberfläche wird beispielsweise auf einer Walze, z. B. einer Rasterwalze, die sich in einem mit der Entwicklerflüssigkeit gefüllten Behälter dreht, gebildet und mittels einer Rakel bis auf eine gewünschte Dicke entfernt. Zwischen einem Zylinder, der das zu entwickelnde Bild trägt, und der Rasterwalze liegt ein kleiner Luftspalt, über den die Entwicklerflüssigkeit in den Bildbereichen, d. h. den ein elektrostatisches Bild tragenden Bereichen, hinübertritt. Der Zylinder trägt beispielsweise eine photoleitende Beschichtung, die zunächst ganzflächig, z. B. durch Corona-Entladung, geladen wird. Anschließend wird die Mantelfläche des Zylinders durch Bestrahlung mit Licht teilweise neutralisiert. An den nicht neutralisierten Stellen zieht die Manteloberfläche die Entwicklerflüssigkeit unter Bildung von Menisken an. Anstelle der Oberfläche des Zylinders läßt sich auch eine über den Zylinder laufende Bedruckstoffbahn bebildern, die auf ihrer Oberfläche eine photoleitende Schicht aufweist, auf der sich ein latentes elektrostatisches Bild einprägen läßt. Die Bebilderung läßt sich unterstützen, indem zwischen der beabstandet angeordneten Farbauftragwalze und den Zylinder eine elektrische Potentialdifferenz angelegt wird.

Eine genaue Steuerung des Tonerübertritts kann mit diesem Verfahren nicht erzielt werden, als Einfärbungsmittel kann nur elektrostatisch aktiver Flüssigtoner verwendet werden.

Bereits seit 1992 ist ein Tintenstrahl-Prinzip bekannt, das beispielsweise in dem Aufsatz "Continuous Gray-Scale Printing with the Electrohydrodynamic Ink-Jet Principle" von D.H. Choi und F.C.Lee aus dem IBM Research Report RJ 8913 (80000) vom 10.08.1992 näher beschrieben wird.

Bei diesem Verfahren wird in einem dünnen, elektrisch leitfähigen Röhrchen ein Flüssigkeitsmeniskus erzeugt, der durch Kapillarkräfte gehalten wird, d.h. die Flüssigkeit fließt nicht aus. Wird nun ein elektrisches Feld bestimmter Größe zwischen diesen Röhrchen und einer in entsprechender Entfernung angebrachten Platte angelegt, so bildet sich infolge elektrostatischer Kräfte ein sehr dünner Flüssigkeitsstrahl, der nach Abschalten des Feldes wieder abbricht. Durch aktives bildmäßiges Schalten des elektrischen Feldes zwischen einzelnen Röhrchen und der Platte läßt sich ein Tintenstrahlbild erzeugen. In einem Tintenstrahlkopf wird dieses Prinzip ausgenutzt, Indem jedes Röhrchen aus einer Vielzahl von Röhrchen, die zusammen den Druckkopf bilden, einzeln elektrisch adressierbar ist. Die Röhrchen haben Durchmesser typischerweise Durchmesser zwischen 200 und 500 µm, während ein Strahldurchmesser von beispielsweise 15 µm erreichbar ist.

Aus der DE 22 07 353 C2 ist es bereits bekannt, Entwicklerflüssigkeit aus Öffnungen, in denen gewisse Kapillarkräfte wirken, austreten zu lassen, wobei diese im Boden eines Behälters vorgesehen sind. Diese Öffnungen ermöglichen die Flüssigkeitsabgabe nicht zuverlässig.

Es ist die Aufgabe der vorliegenden Erfindung, ein einfach aufgebautes, bilddifferenzierendes Entwicklungssystem zu schaffen, bei dem ein flüssiges Einfärbungsmittel Verwendung findet und mit dem eine sichere Abgabe des Einfärbemittels möglich ist.

Diese Aufgabe wird, wie in Patentanspruch 1 angegeben, gelöst.

Vorteilhafte Weiterbildungen ergeben sich aus den Unteransprüchen.

Ein Vorteil der Erfindung besteht darin, daß der Bildträger aus allen Materialien oder Systemen bestehen kann, die ein latentes elektrostatisches Ladungsbild erzeugen oder zumindest für die Dauer eines Entwicklungsvorgangs halten können, beispielsweise dielektrische, ferroelektrische oder photoleitende Materialien oder aktive Bildträgersysteme, wie sie aus der DE 40 22 493 C2 bekannt sind.

Nachstehend wird die Erfindung in einem Ausführungsbeispiel anhand der Zeichnungen näher erläutert. Es zeigen:
- Fig. 1:: einen Farbbehälter mit Düsen zum Aufbringen der Farbe auf einen Bildträger,
- Fig. 2:: eine Düse des Farbbehälters aus Fig. 1 (vergrößert),
- Fig. 3:: eine Draufsicht auf den Boden des Farbbehälters,
- Fig. 4:: eine perspektivische Ansicht der Düsen und

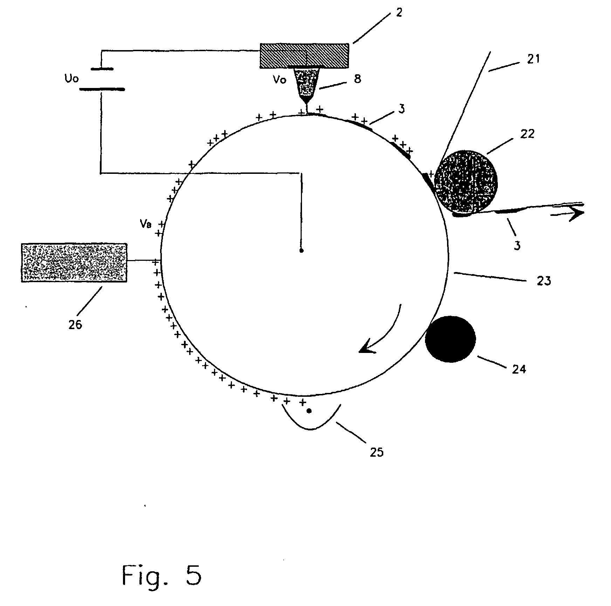

- Fig. 5:: eine Vorrichtung zum Bebildern einer Bedruckstoffbahn.

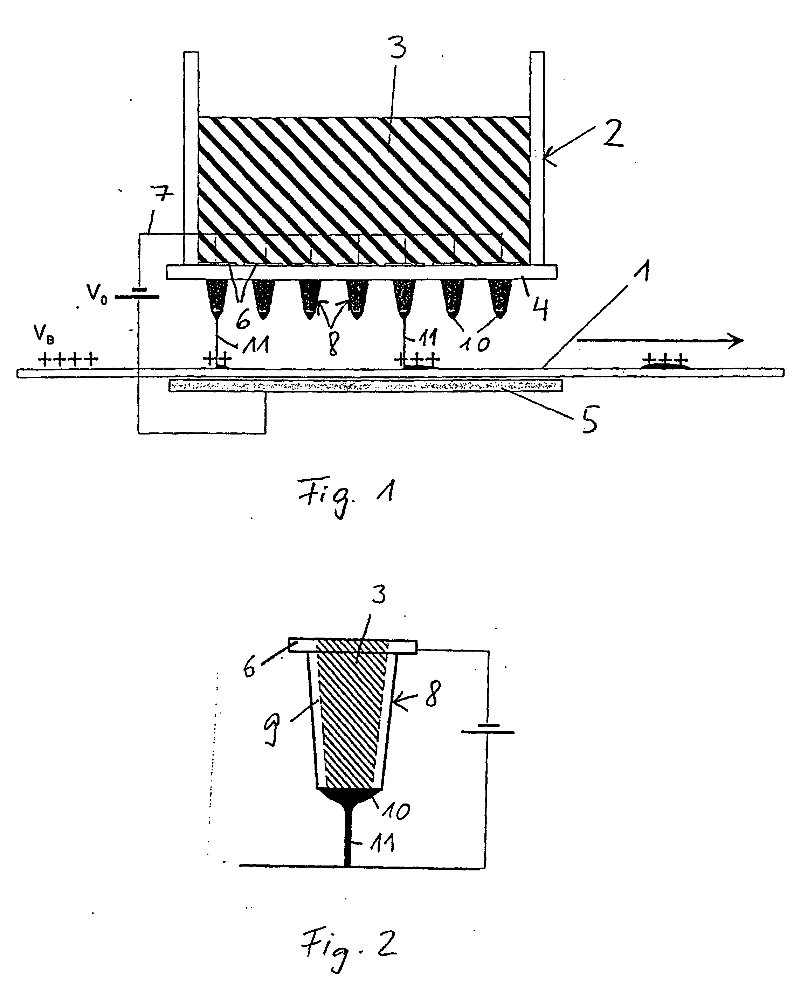

Eine Vorrichtung zum bilddifferenzierenden Entwickeln (Einfärben) eines latenten elektrostatischen Bildes auf einem Bildträger 1 (Fig. 1) weist einen Behälter 2 auf. Der Behälter ist mit einem Einfärbungsmittel 3 gefüllt. Das Einfärbungsmittel ist beispielsweise eine Tonerflüssigkeit, kann jedoch auch jede andere Flüssigkeit, wie z.B. niedrigviskose Flüssigkeiten, Hot Melt-Farbe, eine Flüssigkeit mit hoher elektrischer Leitfähigkeit oder eine isolierende Flüssigkeit, sein. Vorzugsweise können die verwendeten Einfärbungsmittel entweder elektrische Ladungen aufnehmen oder reagieren auf das Anlegen eines elektrischen Feldes in der Art, daß interne Ladungsverteilungen entstehen. Für bestimmte Beschichtungsanwendungen, wie beispielsweise die Druckformherstellung für den Offsetdruck, kann es auch sinnvoll sein, transparente Einfärbungsmittel zu verwenden.

Der Behälter 2 weist an seinem Boden 4 Öffnungen 10 auf, durch die die Farbe 3 bei Anlegen eines ausreichend großen elektrischen Potentials (V_{O} + V_{B}) herausbeschleunigt wird. V_{O} ist hierbei das allen Öffnungen 10 gemeinsame Offsetpotential, bezogen auf ein als Elektrode wirkendes System 5. V_{B} ist das Potential der elektrostatisch aufgeladenen Bildpunkte auf dem Bildträger 1, bezogen auf das als Elektrode wirkende System 5. Liegt das Potential V_{O} unterhalb der Emissionsschwelle, bleibt die Farbe 3 aufgrund der Kapillarität und/oder der Adhäsion in dem Behälter 2.

Entweder weist der Bildträger 1, d. h. der Bedruckstoff, unter seiner, die bildmäßige Ladungsverteilung enthaltenden Schicht oder unter seinen die bildmäßige Ladungsverteilung enthaltenden Schichten eine elektrisch leitfähige Schicht auf, oder unterhalb des Bildträgers 1 befindet sich ein System 5, das als Elektrode wirkt, z.B. eine elektrisch leitfähige Platte. Der Boden 4 wird gegenüber dem System 5 auf das elektrische Offsetpotential V_{O} gelegt. Der Boden 4 muß jedoch nicht notwendigerweise aus einem elektrisch leitfähigen Material bestehen. Es ist z.B. ausreichend, wenn die Öffnungen 10 zum Durchtritt der Farbe 3 im Boden 4 mit Ringen 6 aus einem elektrisch leitfähigen Material umgeben sind und sich die Ringe 6 auf einem gemeinsamen Potential V_{O} befinden. Die Ringe 6 können entweder oberhalb, wie hier dargestellt, oder unterhalb des Bodens 4 angeordnet sein.

In dem hier dargestellten Ausführungsbeispiel bilden die Ringe 6 die Flansche von Düsen 8, die aus dem Boden 4 des Behälters 2 nach unten herausragen. Jede der Düsen 8 weist eine Ummantelung auf, die entweder als Hohlzylinder oder als hohler Kegelstumpf 9 (in Fig. 2 vergrößert dargestellt) ausgebildet ist. Das Innere des Kegelstumpfes 9 ist mit Farbe 3 gefüllt, die am unteren Ende der Düse 8 in Form eines Tropfens herunterhängt. Die Bildstellen auf dem Bildträger 1 liegen jeweils auf einem Potential V_{B}. Das Potential V_{O} ist so gewählt, daß es unterhalb der Potentialschwelle liegt, die notwendig ist, um einen Flüssigkeitsstrahl 11 von den Öffnungen 10 der Düsen 8 in Richtung zu den Bildstellen auf dem Bildträger 1 zu erzeugen.
Erst die Summe der Potentiale V_{O} + V_{B} liegt überhalb der Potentialschwelle, die notwendig ist, um die Farbe 3 in Form eines Strahls auf die Bildstellen des Bildträgers 1 zu übertragen.

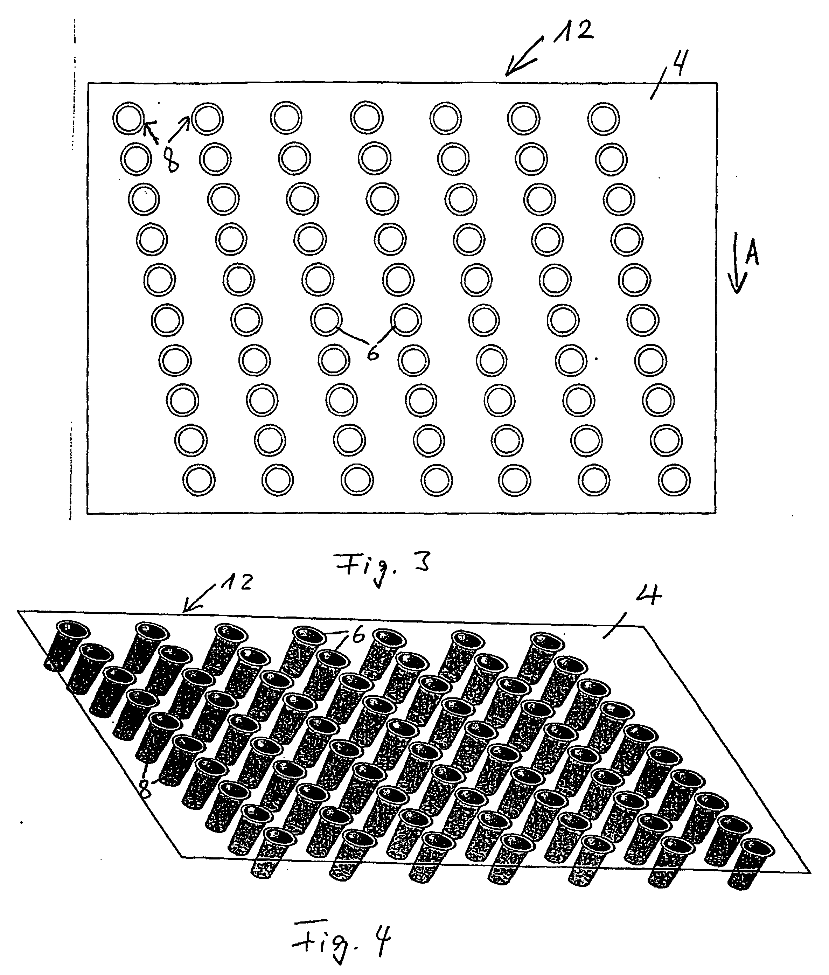

Die zum Anlegen des Potentials V_{O} notwendige Spannung U_{O} stellt also eine Offsetspannung dar, wie sie auch aus dem oben bereits genannten Aufsatz von D.H. Choi und F.C. Lee bekannt ist. Aus diesem Aufsatz ist ebenfalls bekannt, welchen Einfluß der Durchmesser der Öffnungen 10 der Düsen 8 auf die Dicke des Farbstrahls 11 hat. Die Öffnungen 10 der Düsen 8 haben einen Durchmesser zwischen 100 und 500 µm. Der Abstand zwischen den Düsen 8 und dem Bildträger 1 beträgt beispielsweise 100 bis 1000 µm. Die Düsen 8 sind in dem Boden 4 (Fig. 3) derartig zu einem Feld angeordnet, daß bei Bewegung des Behälters 2 oder bei Bewegung des Bildträgers 1 in Richtung des Pfeils A (Fig. 1) alle Bereiche des Bildträgers 1 durch Farbstrahlen 11 oder durch Farbtropfen, die aus den Düsen 8 austreten können, lückenlos überdeckt werden. Alle Düsen 8 liegen auf dem gleichen elektrischen Potential V_{O}. Die Farbstrahlen 11 oder die Farbtröpfchen haben einen Durchmesser zwischen 5 und 20 µm. Es läßt sich somit bei der Bebilderung eine Auflösung erreichen, die viel höher ist als der Durchmesser der Öffnungen 10. Dies ist ein bedeutender Unterschied zu vielen anderen Bebilderungsverfahren, bei denen die Größe der Öffnungen in einem das Einfärbungsmittel abgebenden Behälter das Maß der Auflösung ist.

Wenn nun der an seinen Bildpunkten, beispielsweise elektrostatisch, auf das Potential V_{B} aufgeladene Bildträger 1 unter dem Behälter 2 entlanggeführt wird, so entsteht im Bereich der Bildpunkte ein elektrisches Feld, das jeweils einen Farbstrahl oder einen Farbtropfen aktiviert und damit die Übertragung der Farbe 3 auf den Bildträger 1 bewirkt. An den Nichtbildstellen fehlt dieses elektrische Feld, oder es liegt unterhalb der für die Erzeugung der Farbstrahlen 11 notwendigen Emissionsschwelle. Der Hintergrund bleibt daher völlig frei von der Farbe 3.

Gemäß der Erfindung wird somit ein Verfahren zum Aufbringen der Farbe 3 auf den Bildträger 1 geschaffen, bei dem ohne jede zusätzliche Maßnahme die Farbe 3 nur dorthin übertragen wird, wo sie benötigt wird. Der geringe Durchmesser der Farbstrahlen 11 ermöglicht eine hohe Auflösung des Druckbildes. Dadurch, daß der Durchmesser der Farbstrahlen 11 sehr viel geringer als der der Öffnungen 10, läßt sich ein Durchmesser für die Öffnungen 10 wählen, der groß genug ist, um Verstopfungen durch Partikel der Farbe 3 sicher zu vermeiden. Selbst wenn Verstopfungen durch Eintrocknen von Farbpartikeln im Bereich der Öffnungen 10 auftreten sollten, lassen sich diese leicht reinigen.

In einem anderen Ausführungsbeispiel (Fig. 4) ist das Array 12 unterhalb des Bildträgers 1 angeordnet. In diesem Fall wird durch einen leichten Überdruck, z.B. einen Überdruck von 1 cm Wassersäule, ein Farbmeniskus in den Düsen 8 erzeugt. Diese Anordnung hat den Vorteil, daß auch bei sehr niederviskosen Farben ein Austropfen der Farbe verhindert wird. Der Meniskus kann durch den Druck kontrolliert werden und ist nicht nur durch die Schwerkraft gegeben. Sobald zwischen dem Array 12 und den Bildbereichen des Bildträgers 1 eine ausreichende elektrische Spannung V_{O} + V_{B} anliegt, entstehen nach oben gerichtete Farbstrahlen 11.

In einem weiteren Ausführungsbeispiel (Fig, 5) wird eine Druckform 23 von einer Photoleitertrommel gebildet, wie sie üblicherweise in Laserdruckern verwendet wird. Die Druckform 23 wird mit einer Aufladeeinheit 25, beispielsweise einer Corona-Ladungsquelle, auf das Potential V_{B} aufgeladen. Mit einer Laserbebilderungseinheit 26 wird die Photoleitertrommel an den Nichtbildstellen belichtet und somit leitfähig gemacht, so daß an den Nichtbildstellen die Ladungsträger abfließen und nur an den Bildstellen das Oberflächenpotential V_{B} erhalten bleibt. Beim Anlegen der Vorspannung U₀ zwischen den Düsen 8 und der Photoleitertrommel 23 wird gemäß der Erfindung die Farbe 3 durch die Düsen 8 nur auf die Bildstellen übertragen. Die auf diese Weise bildmäßig aufgebrachte Farbe 3 wird mit einer Transfereinheit 22 beispielsweise thermisch, mittels Druck oder elektrostatisch auf eine Bedruckstoffbahn 21 oder ein anderes zu bedruckendes Medium, beispielsweise aus Papier, übertragen. Nach dem Transfer wird die Photoleitertrommel 23 durch eine Reinigungseinheit 24 gereinigt und entladen.

Anstelle der Farbe 3 läßt sich auch eine Vielzahl anderer Einfärbemittel verwenden. Sowohl Flüssigkeiten mit hoher elektrischer Leitfähigkeit als auch elektrisch nichtleitende Flüssigkeiten sind geeignet. Die elektrisch leitenden Flüssigkeiten lassen sich im Unterschied zu Tintenstrahl-Verfahren mit bildmäßiger Einzelansteuerung der Düsen 8 deswegen verwenden, weil sich alle Düsen auf einem gemeinsamen elektrischen Potential befinden. Als elektrisch leitfähige Farbe eignet sich beispielsweise auch wasserbasierte Tinte. Vorzugsweise wird für elektrographische Druckformen ein elektrostatisch wirksamer Flüssigtoner verwendet.

Wegen der auf kurzen Entfernungen auch lateral wirksamen elektrostatischen Kräfte werden die Farbstrahlen 11 auch dann auf die Bildbereiche fokussiert, wenn sich diese in lateraler Sicht nicht direkt über den Düsen 8 befinden. Dadurch wird die mögliche Auflösung primär durch die Auflösung des latenten elektrostatischen Bildes bestimmt, d.h. die erreichbare Auflösung des entwickelten Bildes ist höher als die geometrische Auflösung der Düsen 8 in dem Array 12.

Falls eine Mehrzahl der Düsen 8 des Arrays 12 (vgl. Fig. 3, 4) entsprechend einer Zone des Bildträgers 1, beispielsweise über eine gemeinsame elektrische Leitung, gesondert von den anderen Düsen 8 elektrisch ansteuerbar sind, lassen sich die einzufärbenden Bildbereiche des Bildträgers 1 entsprechend zonenweise einstellen. Einzelne Bereiche des Arrays 12 lassen sich mit elektrischen Spannungspulsen steuern, die einen unterschiedlichen Strahldurchmesser der Flüssigkeitsstrahlen 11 ergeben, wodurch die ausgespritzte Farbmenge in gewissen Grenzen steuerbar ist. Wenn die Düsen 8 des Arrays 12 einzeln ansteuerbar sind, wie dies bei einem konventionellem Tintenstrahl-Druckkopf üblich ist, eignet sich die Vorrichtung sowohl zum Einfärben des Bildträgers 1 gemäß der Erfindung als auch für das Tintenstrahlverfahren. Bei Verwendung im konventionellen Tintenstrahlverfahren ist die Druckgeschwindigkeit jedoch durch die maximale Farbstrahl-Frequenz und die Übertragungsrate der Bilddaten und die Treiberelektronik begrenzt. Anwendungen für kleine Eindrucke wie Adressierung, Numerierung, etc. sind jedoch möglich.

Durch die Erfindung werden ein Verfahren und eine Vorrichtung zum bilddifferenzierenden Entwickeln (Einfärben) eines latenten elektrostatischen Bildes auf einem Bildträger 1, z.B. einer Druckform, geschaffen, wobei ein in weiten Bereichen unbeschränktes, flüssiges Einfärbungsmittel, z.B. ein Flüssigtoner oder eine Farbe 3, in Form von Farbstrahlen 11 auf die Bildbereiche des Bildträgers aufgebracht wird. Die Bildbereiche liegen auf einem Potential V_{B}, das in Verbindung mit einem Offsetpotential V_{O} der Düsen 8 ausreicht, um, aufgrund der in dem Aufsatz von D.H. Choi und F.C. Lee beschriebenen Vorgänge, Farbstrahlen 11 zu erzeugen, die Bildbereiche des Bildträgers 1 bebildern.

## Patentansprüche

1. Vorrichtung zum bilddifferenzierenden Einfärben eines latenten elektrostatischen Bildes mit einem Einfärbungsmittel (3), das aus einem Behälter (2) durch elektrostatische Kräfte auf das latente Bild aufgebracht wird, wobei der Behälter (2) an den Bildstellen eines Bildträgers (1) gegenüber diesem ein elektrisches Potential (V_{Bt} + V₀) aufweist, wobei eine Öffnungen (10) enthaltende Wand (4) des Behälters (2) wenigstens jeweils im Bereich der Öffnungen (10) elektrisch leitfähig ist und dieser Bereich ein einheitliches elektrisches Potential (V₀) aufweist, und dass das Einfärbungsmittel (3) durch aus der Wand (4) herausragende Öffnungen (10) mit einem Durchmesser zwischen 200 bis 500 µm in Form von Düsen (8) in dem Behälter (2) in Form von Farbstrahlen (11) auf die Bildstellen des Bildträgers (1) oder einen zwischen dem Behälter (2) und dem Bildträger (1) befindlichen Druckstoff übertragen wird, in der Weise, dass durch die Ladung (V_{B}) der Bildpunkte des Bildträgers (1) die Kapillarität und/oder Adhäsion in dem Behälter (2) überwunden wird, wobei die Farbstrahlen (11) einen wesentlich kleineren Durchmesser als die Öffnungen (10) haben.

2. Vorrichtung nach Anspruch 1, **dadurch gekennzeichnet, dass** der Bildträger (1) und der Behälter (2) relativ zueinander während der Bebilderung bewegt werden.

3. Vorrichtung nach Anspruch 3, **dadurch gekennzeichnet, dass** die elektrisch leitfähigen Bereiche an der Außenwand (4) des Behälters (2) durch Ringe (6) gebildet werden, die die Öffnungen (10)umgeben und sich auf einem gemeinsamen elektrischen Potential befinden.

4. Vorrichtung nach einem der Ansprüche 2 oder 3, **dadurch gekennzeichnet, dass** die Form des Behälters (2) der des Bildträgers (1) angepasst ist.

5. Vorrichtung nach Anspruch 1, **dadurch gekennzeichnet, dass** die Düsen (8) als Hohlzylinder oder als hohle Kegelstümpfe ausgebildet sind.

6. Vorrichtung nach Anspruch 5, **dadurch gekennzeichnet, dass** die Seitenwand der Düsen (8) elektrisch leitfähig ist.

7. Vorrichtung nach einem der Ansprüche 1 bis 6, **dadurch gekennzeichnet, dass** die Öffnungen (10) in Reihen angeordnet sind, wobei die Öffnungen (10) insbesondere von einer Reihe (19) zur nächsten schräg versetzt zueinander angeordnet sind.

8. Vorrichtung nach einem der Ansprüche 1 bis 7, **dadurch gekennzeichnet, dass** das Einfärbungsmittel (3) eine niedrig- oder eine hochviskose Flüssigkeit ist, die entweder nichtleitend oder elektrisch leitfähig und insbesondere wasserbasiert ist.

9. Vorrichtung nach einem der Ansprüche 1 bis 8, **dadurch gekennzeichnet, dass** der Bildträger (1) ein Bedruckstoff mit einem latenten elektrostatischen Bild oder eine Druckform mit einem latenten elektrostatischen Bild ist.

10. Vorrichtung nach Anspruch 9, **dadurch gekennzeichnet, dass** die Druckform auf einen Formzylinder aufgebracht ist und mittels des Behälters (2) bei Anliegen eines elektrischen Potentials zwischen dem Behälter (2) und der Druckform bebilderbar ist.

11. Vorrichtung nach Anspruch 10, **dadurch gekennzeichnet, dass** die Druckform als Photoleitertrommel (23) ausgebildet ist.

12. Vorrichtung nach Anspruch 10 oder 11, **dadurch gekennzeichnet, dass** die Oberfläche der Druckform, nachdem diese für einen Druckprozess verwendet worden ist, durch eine Reinigungseinheit (24) erneuerbar und von neuem bebilderbar ist.

13. Vorrichtung nach Anspruch 12, **dadurch gekennzeichnet, dass** der Formzylinder und der Behälter (2) innerhalb einer Druckmaschine angeordnet sind.

14. Vorrichtung nach einem der Ansprüche 10 bis 13, **dadurch gekennzeichnet, dass** der Behälter (2) eine von dem Formzylinder beabstandete Außenwand (4) aufweist, die kreisbogenförmig gekrümmt ist und deren Krümmungsradius dem Radius des Formzylinders entspricht.

## Claims

1. A device for the image-differentiating inking of a latent electrostatic image using an inking means (3), which is applied to the latent image from a container (2) as a result of electrostatic forces, the container (2) having at the image points of an image carrier (1) an electric potential (V_{Bt} + V₀) relative to the carrier, a wall (4) of the container (2), which contains openings (10), being electrically conductive at least in each case in the region of the openings (10) and this region having a uniform electric potential (V₀), and the inking means (3) being transferred in the form of inkjets (11) to the image points of the image carrier (1), or a printing material located between the container (2) and the image carrier (1), through openings (10) in the container (2), which project out of the wall (4) in the form of nozzles (8) and have a diameter between 200 and 500 µm, in such a way that the capillarity and/or adhesion in the container (2) is overcome as a result of the charging (V_{B}) of the image points of the image carrier (1), the inkjets (11) having a substantially smaller diameter than the openings (10).

2. A device according to Claim 1, **characterised in that** the image carrier (1) and the container (2) are moved relative to one another during the creation of the image.

3. A device according to Claim 3, **characterised in that** the electrically conductive regions on the outer wall (4) of the container (2) are formed by rings (6) which surround the openings (10) and are at a common electric potential.

4. A device according to one of Claims 2 or 3, **characterised in that** the shape of the container (2) is adapted to that of the image carrier (1).

5. A device according to Claim 1, **characterised in that** the nozzles (8) are constructed as hollow cylinders or as hollow truncated cones.

6. A device according to Claim 5, **characterised in that** the side wall of the nozzles (8) is electrically conductive.

7. A device according to one of Claims 1 to 6, **characterised in that** the openings (10) are arranged in rows, the openings (10), particularly from one row (19) to the next, being arranged mutually offset on a slant.

8. A device according to one of Claims 1 to 7, **characterised in that** the inking means (3) is a liquid of low or high viscosity, which is either non-conductive or electrically conductive and particularly water-based.

9. A device according to one of Claims 1 to 8, **characterised in that** the image carrier (1) is a printing material having a latent electrostatic image or a printing forme having a latent electrostatic image.

10. A device according to Claim 9, **characterised in that** the printing forme is mounted on a forme cylinder and may have an image created thereon by means of the container (2) when an electric potential is applied between the container (2) and the printing forme.

11. A device according to Claim 10, **characterised in that** the printing forme is constructed as a photoconductive drum (23).

12. A device according to Claim 10 or 11, **characterised in that**, after it has been used for a printing process, the surface of the printing forme may be renewed by a cleaning unit (24) and may have a new image created thereon.

13. A device according to Claim 12, **characterised in that** the forme cylinder and the container (2) are arranged in a printing machine.

14. A device according to one of Claims 10 to 13, **characterised in that** the container (2) has an outer wall (4) which is spaced from the forme cylinder, is curved in the form of a circular arc and has a radius of curvature which corresponds to the radius of the forme cylinder.

## Revendications

1. Dispositif pour l'encrage, en images différenciées, d'une image électrostatique latente à l'aide d'un produit d'encrage (3) qui, à partir d'un réservoir (2), est déposé sur l'image latente par l'intermédiaire de forces électrostatiques, le réservoir (2) présentant alors au niveau des zones d'image d'un porteur d'image (1), un potentiel électrique (V_{Bt} + V₀) par rapport à ce dernier, une paroi (4), comportant des ouvertures (10), du réservoir (2) étant électriquement conductrice, au moins dans la région de chacune des ouvertures (10), et cette région présentant un potentiel électrique unitaire (V₀), étant précisé que le produit d'encrage (3) est, sous forme de jets d'encre (11), transféré, à travers des ouvertures (10) d'un diamètre compris entre 200 et 500 µm faisant saillie depuis la paroi (4), sous forme de buses (8) présentes dans le réservoir (2), sur les zones d'image du porteur d'image (1) ou sur un matériau support d'impression se trouvant entre le réservoir (2) et le porteur d'image (1), ceci de la manière consistant en ce que la capillarité et/ou l'adhérence dans le réservoir (2) est vaincue par la charge (V_{B}) des points-image du support d'image (1), les jets d'encre (11) ayant alors un diamètre nettement plus petit que les ouvertures (10).

2. Dispositif selon la revendication 1, **caractérisé en ce que** le porteur d'image (1) et le réservoir (2) sont déplacés l'un par rapport à l'autre durant la formation de l'image.

3. Dispositif selon la revendication 2, **caractérisé en ce que** les régions électriquement conductrices au niveau de la paroi extérieure (4) du réservoir (2) sont formées par des anneaux (6), qui entourent les ouvertures (10) et se trouvent à un potentiel électrique commun.

4. Dispositif selon l'une des revendications 2 ou 3, **caractérisé en ce que** la forme du réservoir (2) est adaptée à celle du porteur d'image (1).

5. Dispositif selon la revendication 1, **caractérisé en ce que** les buses (8) sont réalisées sous forme de cylindres creux ou de troncs de cône creux.

6. Dispositif selon la revendication 5, **caractérisé en ce que** la paroi latérale des buses (8) est électriquement conductrice.

7. Dispositif selon l'une des revendications 1 à 6, **caractérisé en ce que** les ouvertures (10) sont disposées en rangées, les ouvertures (10) étant alors positionnées les unes par rapport aux autres, en particulier d'une rangée (19) à la suivante, suivant un décalage en oblique.

8. Dispositif selon l'une des revendications 1 à 7, **caractérisé en ce que** le produit d'encrage (3) est un liquide faiblement visqueux ou un liquide hautement visqueux, qui soit est non conducteur soit est électriquement conducteur, et qui est en particulier à base d'eau.

9. Dispositif selon l'une des revendications 1 à 8, **caractérisé en ce que** le porteur d'image (1) est un matériau support d'impression portant une image électrostatique latente ou une forme d'impression portant une image électrostatique latente.

10. Dispositif selon la revendication 9, **caractérisé en ce que** la forme d'impression est montée sur un cylindre porte-forme et peut être pourvue d'une image, au moyen du réservoir (2), lors de l'application d'un potentiel électrique entre le réservoir (2) et la forme d'impression.

11. Dispositif selon la revendication 10, **caractérisé en ce que** la forme d'impression est réalisée sous la forme d'un tambour photoconducteur (23).

12. Dispositif selon la revendication 10 ou 11, **caractérisé en ce que** la surface libre de la forme d'impression, après que celle-ci a été employée pour une opération d'impression, peut être rénovée au moyen d'une unité de nettoyage (24) et pourvue à nouveau d'une image.

13. Dispositif selon la revendication 12, **caractérisé en ce que** le cylindre porte-forme et le réservoir (2) sont disposés à l'intérieur d'une machine à imprimer.

14. Dispositif selon l'une des revendications 10 à 13, **caractérisé en ce que** le réservoir (2) présente une paroi extérieure (4) espacée du cylindre porte-forme, qui est incurvée sous la forme d'un arc de cercle et dont le rayon de courbure correspond au rayon du cylindre porte-forme.
